# FASCICULE DE BREVET EUROPEEN

(11) **EP 4 113 243 B1**
(45) Date de publication et mention de la délivrance du brevet: **25.10.2023**
(21) Numéro de dépôt: 22177188.4
(22) Date de dépôt: 03.06.2022
(51) Int. Cl.: G05D 1/10

(54) **SYSTEME D'AIDE AU VOL EN FORMATION D'AERONEFS**
FLUGASSISTENZSYSTEM ZUM FORMATIONSFLIEGEN VON LUFTFAHRZEUGEN
SYSTEM TO ASSIST FORMATION FLIGHT OF AIRCRAFT

(30) Priorité: 01.07.2021 FR 2107156
(43) Date de publication de la demande: 04.01.2023
(73) Titulaire: Airbus (S.A.S.), 31700 Blagnac (FR)
(72) Inventeur: ADAMS, Jordan Lee, 31700 BLAGNAC (FR); HERNANZ GONZALEZ, Julio, 31700 BLAGNAC (FR); WARTON, Nicolas, 31700 BLAGNAC (FR)
(74) Mandataire: Jardel, Marc Henry Philippe

(56) Documents cités:
- WO-A1-2015/160945
- US-A1- 2008 030 375
- US-A1- 2019 041 875
- US-A1- 2019 310 642

## Description

### DOMAINE TECHNIQUE

La présente invention concerne un système d'aide au vol en formation d'aéronefs. Plus particulièrement, la présente invention concerne un système d'aide au positionnement d'aéronefs suiveurs par rapport à des tourbillons marginaux d'un aéronef meneur lors d'un vol en formation.

### ETAT DE LA TECHNIQUE ANTERIEURE

Les tourbillons marginaux (« wake vortices » en anglais), aussi appelés « tourbillons de bouts d'aile » (« wingtip vortices » en anglais), sont des turbulences de sillage aux extrémités des ailes d'un aéronef en vol. Les tourbillons marginaux peuvent subsister plusieurs minutes après le passage d'un aéronef, et perturber la trajectoire d'un autre aéronef passant à proximité entretemps. Des distances de sécurité entre aéronefs en vol sont appliquées par le contrôle de trafic aérien ATC (« Air Traffic Control » en anglais) pour prendre en compte les turbulences de sillage et éviter d'éventuelles difficultés de vol liées à leur existence.

Le document US2019310642 décrit un procédé et un dispositif de détermination de trajectoire vers une position optimale d'un aéronef suiveur par rapport à des vortex générés par un aéronef meneur.

En formation, un aéronef meneur (« leader aircraft » en anglais) est suivi par un ou plusieurs aéronefs suiveurs (« follower aircraft » en anglais), qui peuvent subir les tourbillons marginaux de l'aéronef meneur. Toutefois, en maîtrisant leur position par rapport aux tourbillons marginaux, les aéronefs suiveurs peuvent bénéficier d'un phénomène de flux d'air montant induit par les tourbillons marginaux, réduisant ainsi traînée et consommation de carburant. Par contre, si les aéronefs suiveurs pénètrent l'espace entre les tourbillons marginaux de l'aéronef meneur, les aéronefs suiveurs subissent un phénomène de flux d'air descendant qui est induit par les tourbillons marginaux et qui nuit à la performance et à la stabilité de l'aéronef. En particulier, la proximité des tourbillons marginaux entraîne des risques pour les opérations continues de l'aéronef suiveur, tels que : l'aéronef suiveur peut subir des turbulences associées aux tourbillons marginaux, les moteurs de l'aéronef suiveur peuvent être exposés à des gradients de vitesse et des pression élevés, et l'aéronef suiveur a plus forte probabilité d'entrer involontairement dans l'espace entre les tourbillons marginaux de l'aéronef meneur.

Afin d'atténuer ces risques, il est alors souhaitable de fournir une solution qui permette d'assister un pilote d'aéronef volant en formation dans la gestion du positionnement de son aéronef par rapport à des tourbillons marginaux générés par un autre aéronef évoluant devant lui.

### EXPOSE DE L'INVENTION

Il est alors proposé un procédé implémenté par un système d'aide au vol en formation d'un aéronef suiveur par rapport à un tourbillon marginal d'un aéronef meneur, le système d'aide au vol en formation comportant un contrôleur et au moins un accéléromètre installé sur l'aéronef suiveur, le procédé comportant les étapes suivantes effectuées par le contrôleur : recevoir des mesures d'accélération effectuées par ledit au moins un accéléromètre ; traiter les mesures reçues de sorte à en obtenir une valeur représentative de vibrations générées par le tourbillon marginal de l'aéronef meneur ; effectuer une comparaison de la valeur obtenue avec un seuil prédéterminé représentatif de vibrations excessives au regard de la localisation dudit au moins un accéléromètre sur l'aéronef suiveur ; générer une notification lorsque la comparaison montre que la valeur obtenue est supérieure au seuil prédéterminé. Ainsi, le positionnement de l'aéronef suiveur dans le vol en formation est facilité, afin de bénéficier d'un phénomène de flux d'air montant induit par le tourbillon marginal de l'aéronef meneur.

En outre, le ou les accéléromètres du système d'aide au vol en formation sont dédiés à ce système, c'est-à-dire que ces accéléromètres ne sont pas destinés à être utilisés par un autre système de positionnement de l'aéronef pour le vol en formation. Autrement dit, le ou les accéléromètres du système d'aide au vol en formation sont indépendants d'autres systèmes de positionnement de l'aéronef pour le vol en formation. Ainsi, le système d'aide au vol en formation est indépendant des sources d'informations d'un système de gestion des commandes de vol, c'est-à-dire indépendant des lois de contrôle du vol en formation.

Selon un mode de réalisation particulier, le contrôleur effectue les étapes suivantes : recevoir des mesures d'accélération effectuées par un dit accéléromètre ; extraire des mesures d'accélération reçues une valeur de crête sur une fenêtre temporelle de durée prédéfinie ; comparer la valeur de crête extraite avec le seuil prédéterminé ; générer la notification lorsque la comparaison montre que la valeur de crête extraite est supérieure au seuil prédéterminé.

Selon un mode de réalisation particulier, le contrôleur effectue les étapes suivantes : recevoir des mesures d'accélération effectuées par un dit accéléromètre ; extraire des mesures d'accélération reçues une valeur de variance sur une fenêtre temporelle ; comparer la valeur de variance extraite avec le seuil prédéterminé ; générer la notification lorsque la comparaison montre que la valeur de variance extraite est supérieure au seuil prédéterminé.

Selon un mode de réalisation particulier, le contrôleur effectue les étapes suivantes : recevoir des premières mesures d'accélération effectuées par un premier dit accéléromètre localisé sur une aile de l'aéronef suiveur ; extraire des premières mesures d'accélération reçues une première valeur de variance sur une fenêtre temporelle ; recevoir des deuxièmes mesures d'accélération effectuées par un second dit accéléromètre localisé sur l'autre aile de l'aéronef suiveur; extraire des deuxièmes mesures d'accélération reçues une deuxième valeur de variance sur la fenêtre temporelle ; déterminer une valeur de différence entre les première et deuxième valeurs de variance ; comparer la valeur de différence déterminée avec le seuil prédéterminé ou un autre seuil prédéterminé ; générer la notification lorsque la comparaison montre que la valeur de différence déterminée est supérieure au seuil prédéterminé ou respectivement à l'autre seuil prédéterminé.

Et selon un mode de réalisation particulier, chaque valeur de variance précitée est une valeur de variance glissante.

Selon un mode de réalisation particulier, le contrôleur obtient une information indiquant si l'aéronef suiveur se trouve à droite ou à gauche de l'aéronef meneur.

Selon un mode de réalisation particulier, lorsque plusieurs dits accéléromètres sont installés sur l'aéronef suiveur, le contrôleur obtient l'information indiquant si l'aéronef suiveur se trouve à droite ou à gauche de l'aéronef meneur en comparant entre elles des mesures desdits accéléromètres.

Selon un mode de réalisation particulier, la notification est un ordre d'activation d'un signal lumineux et/ou sonore dans le cockpit de l'aéronef suiveur et/ou un message envoyé à un système de gestion des commandes de vol de l'aéronef suiveur.

Il est aussi proposé un système d'aide au vol en formation d'un aéronef suiveur par rapport à un tourbillon marginal d'un aéronef meneur, le système d'aide au vol en formation comportant un contrôleur et au moins un accéléromètre installé sur l'aéronef suiveur, le contrôleur comportant de la circuiterie électronique configurée pour : recevoir des mesures d'accélération effectuées par ledit au moins un accéléromètre ; traiter les mesures reçues de sorte à en obtenir une valeur représentative de vibrations générées par le tourbillon marginal de l'aéronef meneur ; effectuer une comparaison de la valeur obtenue avec un seuil prédéterminé représentatif de vibrations excessives au regard de la localisation dudit au moins un accéléromètre sur l'aéronef suiveur ; générer une notification lorsque la comparaison montre que la valeur obtenue est supérieure au seuil prédéterminé.

Il est aussi proposé un aéronef agissant comme suiveur dans un vol en formation et qui comporte un système d'aide au vol en formation tel qu'évoqué ci-dessus.

Selon un mode de réalisation particulier, l'aéronef comporte un système de gestion des commandes de vol ayant au moins une source d'informations, le système d'aide au vol en formation étant indépendant de ladite au moins une source d'informations du système de gestion des commandes de vol, la notification est un message envoyé au système de gestion des commandes de vol, et le système de gestion des commandes de vol est configuré pour effectuer des ajustements de trajectoire de l'aéronef suiveur en fonction dudit message.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
La figure 1 illustre schématiquement, en vue de dessus, un aéronef équipé d'un système d'aide au vol en formation ;
La figure 2 illustre schématiquement un exemple d'architecture matérielle d'un contrôleur du système d'aide au vol en formation ;
La figure 3 illustre schématiquement un positionnement d'aéronef suiveur par rapport à un aéronef meneur lors d'un vol en formation ;
La figure 4 illustre schématiquement des positionnements possibles sur l'aéronef suiveur d'accéléromètres du système d'aide au vol en formation ;
La figure 5 illustre schématiquement un algorithme de détection de proximité excessive d'un tourbillon marginal, selon un premier mode de réalisation ;
La figure 6 illustre schématiquement un agencement matériel adapté à une implémentation de l'algorithme de la Fig. 5 ;
La figure 7 illustre schématiquement un algorithme de détection de proximité excessive d'un tourbillon marginal, selon un deuxième mode de réalisation ;
La figure 8 illustre schématiquement un agencement matériel adapté à une implémentation de l'algorithme de la Fig. 7.

### EXPOSE DETAILLE DE MODES DE REALISATION

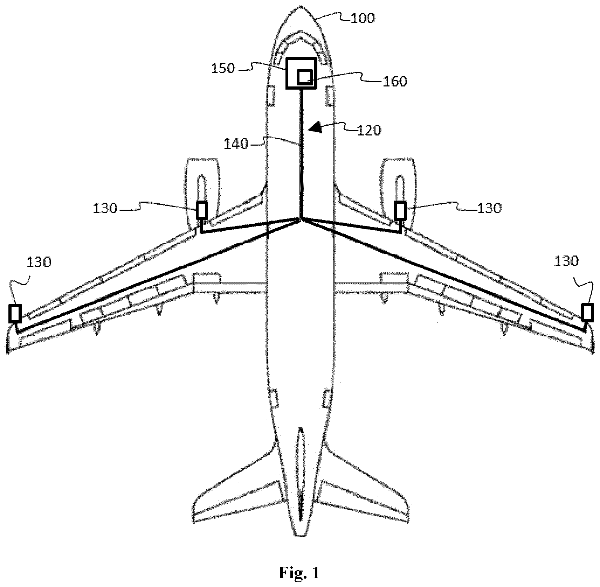

La **Fig. 1** illustre schématiquement, en vue de dessus, un aéronef 100 équipé d'un système 120 d'aide au vol en formation, plus particulièrement lorsque l'aéronef 100 est suiveur.

Le système 120 comporte un contrôleur 160. Dans un mode de réalisation particulier, le contrôleur 160 est intégré à l'avionique 150 de l'aéronef 100.

Le système 120 comporte au moins un accéléromètre 130 adapté pour effectuer des mesures de vibrations. Chaque accéléromètre 130 est relié au contrôleur 160 par un système de communication, bus de communication ou réseau de communication 140.

Préférentiellement, le système 120 est débrayable et est activé pendant des phases de vol en formation où l'aéronef 100 est un aéronef suiveur. Par exemple, le système 120 est activé / désactivé sur commande d'un pilote de l'aéronef 100.

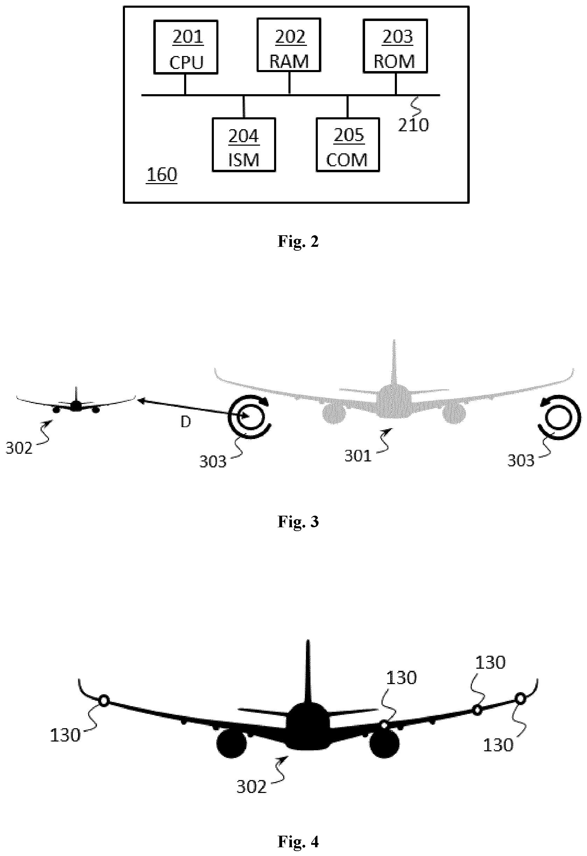

La **Fig. 2** illustre schématiquement un exemple d'architecture matérielle du contrôleur 160.

Le contrôleur 160 comprend alors, reliés par un bus de communication 210 : un processeur ou CPU (« Central Processing Unit » en anglais) 201 ; une mémoire vive RAM (« Random Access Memory » en anglais) 202 ; une mémoire morte ROM (« Read Only Memory » en anglais) 203, par exemple une mémoire Flash ; un dispositif de stockage de données, tel qu'un disque dur HDD (« Hard Disk Drive » en anglais), ou un lecteur de support de stockage, tel qu'un lecteur de cartes SD (« Secure Digital » en anglais) 204 ; au moins une interface de communication 205 permettant au contrôleur 160 d'interagir plus particulièrement avec chaque accéléromètre 130 et avec d'autres équipements de l'aéronef 100, comme par exemple un système de gestion des commandes de vol de l'avionique 150.

Le processeur 201 est capable d'exécuter des instructions chargées dans la RAM 202 à partir de la ROM 203, d'une mémoire externe (non représentée), d'un support de stockage, tel qu'une carte SD, ou d'un réseau de communication (non représenté). Lorsque le contrôleur 160 est mis sous tension, le processeur 201 est capable de lire de la RAM 202 des instructions et de les exécuter. Ces instructions forment un programme d'ordinateur causant la mise en oeuvre, par le processeur 201, des comportements, étapes et algorithmes décrits ici.

Tout ou partie des architectures modulaires, comportements, étapes et algorithmes décrits ici peut ainsi être implémenté sous forme logicielle par exécution d'un ensemble d'instructions par une machine programmable, telle qu'un DSP (« Digital Signal Processor » en anglais) ou un microcontrôleur, ou être implémenté sous forme matérielle par une machine ou un composant (« chip » en anglais) dédié ou un ensemble de composants (« chipset » en anglais) dédié, tel qu'un FPGA (« Field-Programmable Gate Array » en anglais) ou un ASIC (« Application-Specific Integrated Circuit » en anglais). Le contrôleur 160, et plus généralement le système 120, comporte donc de la circuiterie électronique agencée et configurée pour implémenter les architectures modulaires, comportements, étapes et algorithmes décrits ici.

La **Fig. 3** illustre schématiquement un positionnement d'aéronef suiveur 302 par rapport à un aéronef meneur 301 lors d'un vol en formation. Les aéronefs 301 et 302 sont en vol de croisière. Le déplacement de l'aéronef meneur 301 génère des tourbillons marginaux (ou tourbillons de bouts d'ailes) 303. Si l'aéronef suiveur 302 se maintient à une distance D comprise entre un seuil minimum Dmin et un seuil maximum Dmax des tourbillons marginaux à l'extérieur de la trajectoire de l'aéronef meneur 301, l'aéronef suiveur 302 bénéficie d'un phénomène de flux d'air montant induit par les tourbillons marginaux, réduisant ainsi traînée et consommation de carburant pour l'aéronef suiveur 302.

Le système 120 aide au maintien de la distance D au-dessus du seuil minimum Dmin pendant le vol en formation en analysant des accélérations mesurées par le ou les accéléromètres 130. En effet, plus l'aéronef suiveur 302 s'approche des tourbillons marginaux de l'aéronef meneur 301, plus l'intensité des vibrations est grande, plus les mesures d'accélération effectuées par les accéléromètres 130 sont élevées. De plus, lorsque l'aéronef suiveur 302 a pénétré un tourbillon marginal de l'aéronef meneur 301, l'intensité des vibrations est encore plus grande, et les mesures d'accélération effectuées par les accéléromètres 130 sont plus élevées.

La **Fig. 4** illustre schématiquement des positionnements possibles sur l'aéronef suiveur 302 des accéléromètres 130.

Un ou plusieurs accéléromètres 130 sont installés sur l'aéronef suiveur 302. Un ou plusieurs accéléromètres 130 sont préférentiellement installés sur l'une et/ou l'autre des ailes de l'aéronef suiveur 302 ou sur un élément qui y est attaché (e.g., mât moteur). La flexibilité de la structure des ailes aide à la sensibilité des accéléromètres 130.

La position de fixation d'un dit accéléromètre 130 pourrait être : sur l'ailette marginale (« winglet » en anglais), sur la structure extérieure de l'aile, sur les gouvernes dont les positions sont statiques pendant la croisière, sur des éléments internes de l'aile fixés à la structure de l'aéronef suiveur 302 et immobiles pendant le vol (au-delà des vibrations subies), sur le mât moteur, ou sur le moteur ou dans la nacelle. Dans un mode de réalisation particulier, les accéléromètres 130 sont installés à l'avant des ailes, pour minimiser l'impact des turbulences engendrées par l'aéronef suiveur 302 lui-même.

Comme détaillé ci-après, installer au moins un dit accéléromètre 130 sur chacune des ailes permet d'améliorer la capacité de détection de proximité d'un tourbillon marginal.

Dans un mode de réalisation préféré, un premier accéléromètre 130 est installé au bout d'une aile (« wingtip » en anglais) et un deuxième accéléromètre 130 est installé au bout de l'autre aile.

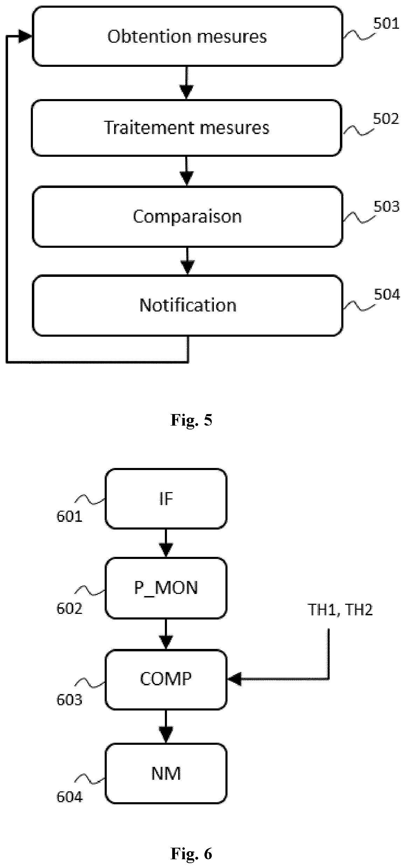

La **Fig. 5** illustre schématiquement un algorithme de détection de proximité excessive d'un tourbillon marginal à partir de mesures effectuées par au moins un accéléromètre 130.

Dans une étape 501, le contrôleur 160 obtient des mesures d'accélération en provenance d'un accéléromètre 130. L'accéléromètre 130 en question peut être un accéléromètre parmi une pluralité d'accéléromètres 130 installés sur l'aéronef. Lorsque plusieurs accéléromètres 130 sont installés sur l'aéronef suiveur 302, le contrôleur 160 peut en variante obtenir une combinaison de mesures, par exemple selon une moyenne pondérée, en provenance desdits accéléromètres 130.

Dans un mode de réalisation particulier, le contrôleur 160 obtient une information indiquant si l'aéronef suiveur 302 se trouve à droite ou à gauche de l'aéronef meneur 301. Cette information peut être fournie par l'avionique 150, par exemple suite à une commande ou une saisie depuis des instruments du cockpit de l'aéronef suiveur 302. En effet, étant donné que les vibrations perçues par les accéléromètres 130 diffèrent selon si le tourbillon marginal de l'aéronef meneur 301 est à droite ou à gauche de l'aéronef suiveur 302, cette information permet d'ajuster l'analyse des mesures issues de plusieurs accéléromètres 130 (qu'ils soient localisés sur la même aile ou pas). Ainsi, par exemple, les poids de la moyenne pondérée susmentionnée sont ajustés en fonction de la position de chaque accéléromètre 130 sur l'aéronef suiveur 302 et en fonction de la position (à droite ou à gauche) de l'aéronef suiveur 302 par rapport à l'aéronef meneur 301 dans la formation. Il peut ainsi être tenu compte que plus un accéléromètre 130 est éloigné de la position supposée des tourbillons marginaux de l'aéronef meneur 301, plus l'intensité des vibrations subies est faible. De même, plus un accéléromètre 130 est proche d'un bout d'aile, plus l'intensité des vibrations subies est élevée, car la structure de l'aile y est plus flexible.

Dans un mode de réalisation particulier dans lequel plusieurs accéléromètres 130 sont installés sur l'aéronef suiveur 302, l'information indiquant si l'aéronef suiveur 302 se trouve à droite ou à gauche de l'aéronef meneur 301 est déterminée de manière automatique par le contrôleur 160. Une fois que l'avionique 150 a activé le système 120, le contrôleur 160 compare les mesures des accéléromètres 130 et déduit de la localisation desdits accéléromètres 130 sur l'aéronef 130 si l'aéronef suiveur 302 se trouve à droite ou à gauche de l'aéronef meneur 301 (du côté où les vibrations, donc les accélérations mesurées, sont les plus fortes).

Dans une étape 502, le contrôleur 160 traite les mesures reçues à l'étape 501 de sorte à en obtenir une valeur représentative de vibrations générées par un tourbillon marginal de l'aéronef meneur 301. Dans un mode de réalisation particulier, le contrôleur 160 détermine une valeur absolue de crête, ou une valeur moyenne, ou d'écart type ou de variance, ou une densité spectrale de puissance, sur une fenêtre temporelle. Dans un mode de réalisation particulier, le contrôleur 160 applique un filtre, par exemple de suppression de bruit ou d'interférence, sur les mesures reçues à l'étape 501.

Dans une étape 503, le contrôleur 160 compare la valeur obtenue à l'étape 502 avec un premier seuil prédéterminé représentatif de vibrations excessives au regard de la localisation des accéléromètres sur l'aéronef suiveur 302. Par exemple, ce premier seuil est prédéfini et fixé d'après des relevés de mesures effectués lors de tests grandeur nature ou à des simulations. Ce premier seuil prédéterminé est représentatif du fait que l' aéronef suiveur 302 se rapproche du tourbillon marginal de l'aéronef meneur 301, à une distance D inférieure au seuil Dmax.

Selon une configuration, dans une étape 503, le contrôleur 160 compare la valeur obtenue à l'étape 502 avec un deuxième seuil prédéterminé représentatif de vibrations excessives au regard de la localisation des accéléromètres sur l'aéronef suiveur 302. Le deuxième seuil prédéterminé est supérieur au premier seuil prédéterminé. Par exemple, ce deuxième seuil est prédéfini et fixé d'après des relevés de mesures effectués lors de tests grandeur nature ou à des simulations. Ce deuxième seuil prédéterminé est représentatif du fait que l'aéronef suiveur 302 a pénétré le tourbillon marginal de l'aéronef meneur 301, à une distance D inférieure au seuil Dmin.

Dans une étape 504, le contrôleur 160 effectue une notification en fonction du résultat de la comparaison à l'étape 503. Cette notification est par exemple un ordre d'activation d'un signal lumineux et/ou sonore dans le cockpit de l'aéronef suiveur 302. Cette notification est par exemple un message envoyé au système de gestion des commandes de vol de l'avionique 150, afin de permettre au système de gestion des commandes de vol d'effectuer un ajustement de trajectoire (dans la direction inverse par rapport à la position du tourbillon marginal).

Le contrôleur 160 peut être configuré pour effectuer une telle notification lorsque la comparaison montre que la valeur obtenue à l'étape 502 est supérieure au premier seuil prédéterminé. Le contrôleur 160 peut au contraire être configuré pour effectuer une telle notification lorsque la comparaison montre que la valeur obtenue à l'étape 502 est inférieure ou égale au premier seuil prédéterminé.

Selon une configuration, le contrôleur 160 peut être configuré pour effectuer une telle notification lorsque la comparaison montre que la valeur obtenue à l'étape 502 est supérieure au deuxième seuil prédéterminé. Le contrôleur 160 peut au contraire être configuré pour effectuer une telle notification lorsque la comparaison montre que la valeur obtenue à l'étape 502 est inférieure ou égale au deuxième seuil prédéterminé. Selon une autre configuration, le contrôleur 160 peut être configuré pour effectuer une telle notification lorsque la comparaison montre que la valeur obtenue à l'étape 502 est supérieure au premier seuil prédéterminé et inférieure ou égale au deuxième seuil prédéterminé.

Ainsi, le contrôleur 160 peut effectuer une première notification lorsque la comparaison montre que la valeur obtenue à l'étape 502 est supérieure au premier seuil prédéterminé (et inférieure au deuxième seuil prédéterminé). Cette première notification indique que l'aéronef suiveur 302 se rapproche du tourbillon marginal de l'aéronef meneur 301 (aéronef suiveur 302 à une distance D inférieure au seuil Dmax). Et le contrôleur 160 peut effectuer une deuxième notification lorsque la comparaison montre que la valeur obtenue à l'étape 502 est supérieure au deuxième seuil prédéterminé (aéronef suiveur 302 à une distance D inférieure au seuil Dmin). Cette deuxième notification indique que l'aéronef suiveur 302 a pénétré le tourbillon marginal de l'aéronef meneur 301.

Le contrôleur 160 peut aussi être configuré pour effectuer une telle notification selon une première forme (par exemple, un premier type de son ou de message) lorsque la comparaison montre que la valeur obtenue à l'étape 502 est supérieure au premier seuil prédéterminé et pour effectuer une telle notification selon une seconde forme (par exemple, un second type de son ou de message) lorsque la comparaison montre que la valeur obtenue à l'étape 502 est inférieure ou égale au premier seuil prédéterminé.

Le contrôleur 160 peut aussi être configuré pour effectuer une telle notification selon une première forme (par exemple, un premier type de son ou de message) lorsque la comparaison montre que la valeur obtenue à l'étape 502 est supérieure au deuxième seuil prédéterminé et pour effectuer une telle notification selon une seconde forme (par exemple, un second type de son ou de message) lorsque la comparaison montre que la valeur obtenue à l'étape 502 est inférieure ou égale au deuxième seuil prédéterminé, ou lorsque la comparaison montre que la valeur obtenue à l'étape 502 est supérieure au premier seuil prédéterminé et inférieure ou égale au deuxième seuil prédéterminé.

Le contrôleur 160 peut aussi être configuré pour effectuer la première notification selon une première forme (par exemple, un premier type de son ou de message) lorsque la comparaison montre que la valeur obtenue à l'étape 502 est supérieure au premier seuil prédéterminé (et inférieure au deuxième seuil prédéterminé) et pour effectuer la deuxième notification selon une seconde forme (par exemple, un second type de son ou de message) lorsque la comparaison montre que la valeur obtenue à l'étape 502 est supérieure au deuxième seuil prédéterminé. La notification selon la première forme indique donc que l'aéronef suiveur 302 se rapproche du tourbillon marginal de l'aéronef meneur 301 (à une distance D inférieure au seuil Dmax), et la notification selon la seconde forme indique que l'aéronef suiveur 302 a pénétré le tourbillon marginal de l'aéronef meneur 301 (à une distance D inférieure au seuil Dmin).

L'algorithme reboucle ensuite sur l'étape 501.

Selon une autre configuration, dans l'étape 503, le contrôleur 160 compare la valeur obtenue à l'étape 502 avec le premier seuil prédéterminé, et lorsque la valeur obtenue à l'étape 502 est supérieure au premier seuil prédéterminé, le contrôleur 160 compare ensuite la valeur obtenue à l'étape 502 avec le deuxième seuil prédéterminé. Alors, dans l'étape 504, le contrôleur 160 effectue une première notification lorsque la comparaison montre que la valeur obtenue à l'étape 502 est supérieure au premier seuil prédéterminé et inférieure au deuxième seuil prédéterminé, et le contrôleur 160 effectue une deuxième notification, différente de la première notification, lorsque la comparaison montre que la valeur obtenue à l'étape 502 est supérieure au deuxième seuil prédéterminé.

La **Fig. 6** illustre schématiquement un agencement modulaire du contrôleur 160, matériel et/ou logiciel, adapté à une implémentation de l'algorithme de la Fig. 5.

Le contrôleur 160 comporte alors une interface IF 601 recevant des mesures d'accélération en provenance d'un accéléromètre 130. L'accéléromètre 130 en question peut être un accéléromètre 130 sélectionné parmi une pluralité d'accéléromètres 130 installés sur l'aéronef suiveur 302.

Le contrôleur 160 comporte aussi un superviseur de valeur de crête P_MON (« Peak Monitor » en anglais) 602 qui surveille les mesures d'accélération reçues via l'interface IF 601 et en extrait une valeur de crête sur une fenêtre temporelle de durée prédéfinie (e.g., cycles de surveillance ou fenêtre glissante).

Le contrôleur 160 comporte en outre un comparateur COMP 603 prenant en première entrée la valeur de crête fournie par le superviseur de valeur de crête P_MON 602 et en seconde entrée une valeur de seuil TH1 (premier seuil prédéterminé) ou TH2 (deuxième seuil prédéterminé), et effectue une comparaison entre les première et seconde entrées.

Le contrôleur 160 comporte aussi un gestionnaire de notification NM 604 afin de générer la notification évoquée à l'étape 504. Par exemple, le gestionnaire de notification NM 604 déclenche une alerte lorsque la valeur de crête fournie par le superviseur de valeur de crête P_MON 602 est supérieure à la valeur de seuil TH1 ou TH2.

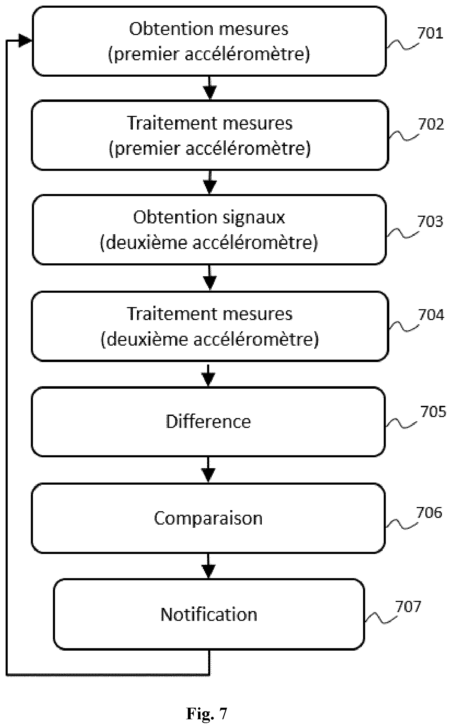

La **Fig. 7** illustre schématiquement un algorithme de détection de proximité excessive d'un tourbillon marginal à partir de mesures effectuées par une pluralité d'accéléromètres 130. Au moins un accéléromètre 130 est localisé sur une aile et au moins un accéléromètre 130 est localisé sur l'autre aile.

Dans une étape 701, le contrôleur 160 obtient des mesures d'accélération en provenance d'au moins un accéléromètre 130 localisé sur une aile de l'aéronef suiveur 302. Lorsque plusieurs accéléromètres 130 sont localisés sur cette aile, le contrôleur 160 peut obtenir une combinaison de mesures, par exemple selon une moyenne pondérée, en provenance desdits accéléromètres 130.

Dans une étape 702, le contrôleur 160 traite les mesures reçues à l'étape 701 de sorte à en obtenir une valeur représentative de vibrations générées par un tourbillon marginal de l'aéronef meneur 301. Dans un mode de réalisation particulier, le contrôleur 160 détermine une variance des mesures reçues à l'étape 701 sur une fenêtre temporelle. Préférentiellement, le contrôleur 160 détermine une variance glissante (« moving variance » en anglais). Dans un mode de réalisation particulier, le contrôleur 160 applique en outre un filtre, par exemple de suppression de bruit ou d'interférence, sur les mesures reçues à l'étape 701.

Dans une étape 703, le contrôleur 160 obtient des mesures d'accélération en provenance d'au moins un accéléromètre 130 localisé sur l'autre aile de l'aéronef suiveur 302. Lorsque plusieurs accéléromètres 130 sont localisés sur cette aile, le contrôleur 160 peut obtenir une combinaison de mesures, par exemple selon une moyenne pondérée, en provenance desdits accéléromètres 130.

Dans une étape 704, le contrôleur 160 traite les mesures reçues à l'étape 703 de sorte à en obtenir une valeur représentative de vibrations générées par un tourbillon marginal de l'aéronef meneur 301. Dans un mode de réalisation particulier, le contrôleur 160 détermine une variance des mesures reçues à l'étape 703 sur la même fenêtre temporelle qu'à l'étape 702. Préférentiellement, le contrôleur 160 détermine une variance glissante. Dans un mode de réalisation particulier, le contrôleur 160 applique en outre un filtre, par exemple de suppression de bruit ou d'interférence, sur les mesures reçues à l'étape 703.

Dans une étape 705, le contrôleur 160 détermine une valeur de différence entre les valeurs obtenues aux étapes 702 et 704. Ainsi, dans un mode de réalisation particulier, le contrôleur 160 détermine une valeur de différence de variance, sur la fenêtre temporelle susmentionnée, entre les valeurs obtenues aux étapes 702 et 704.

Dans une étape 706, le contrôleur 160 compare la valeur de différence obtenue à l'étape 705 avec un troisième seuil prédéterminé représentatif de vibrations excessives au regard de la localisation des accéléromètres 130 sur l'aéronef suiveur 302. Ce troisième seuil prédéterminé est représentatif du fait que l'aéronef suiveur 302 se rapproche du tourbillon marginal de l'aéronef meneur 301, à une distance D inférieure au seuil Dmax. Par exemple, ce troisième seuil est prédéfini et fixé d'après des relevés de mesures effectués lors de tests grandeur nature ou à des simulations.

Selon une autre configuration, dans une étape 706, le contrôleur 160 compare la valeur de différence obtenue à l'étape 705 avec un quatrième seuil prédéterminé représentatif de vibrations excessives au regard de la localisation des accéléromètres 130 sur l'aéronef suiveur 302. Le quatrième seuil prédéterminé est supérieur au troisième seuil prédéterminé. Ce quatrième seuil prédéterminé est représentatif du fait que l'aéronef suiveur 302 a pénétré dans le tourbillon marginal de l'aéronef meneur 301, à une distance D inférieure au seuil Dmin. Par exemple, ce quatrième seuil est prédéfini et fixé d'après des relevés de mesures effectués lors de tests grandeur nature ou à des simulations.

Dans une étape 707, le contrôleur 160 effectue une notification en fonction du résultat de l'étape 706, selon le même principe que dans l'étape 504.

L'algorithme reboucle ensuite sur l'étape 701.

Les algorithmes des Figs. 5 et 7 peuvent être exécutés seuls ou en parallèle.

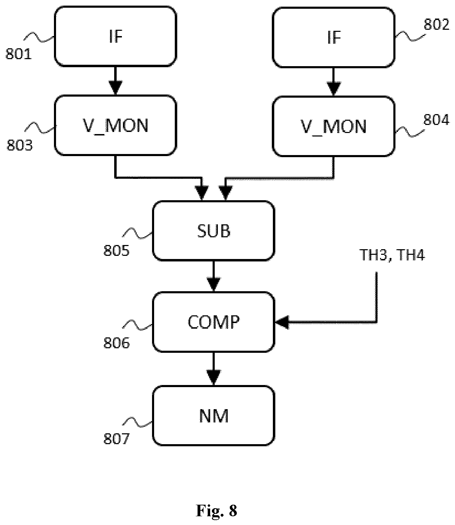

La **Fig. 8** illustre schématiquement un agencement modulaire du contrôleur 160, matériel et/ou logiciel, adapté à une implémentation de l'algorithme de la Fig. 7.

Le contrôleur 160 comporte alors une première interface IF 801 recevant des mesures d'accélération en provenance d'au moins un accéléromètre 130 localisé sur une aile de l'aéronef suiveur 302. Le contrôleur 160 comporte aussi une seconde interface IF 802 recevant des mesures d'accélération en provenance d'au moins un accéléromètre 130 localisé sur l'autre aile de l'aéronef suiveur 302.

Le contrôleur 160 comporte aussi un superviseur de valeur de variance V_MON (« Variance Monitor » en anglais) 803 qui surveille les mesures reçues via la première interface IF 801 et en extrait une valeur de variance, préférentiellement glissante, sur une fenêtre temporelle (e.g., cycles de surveillance ou fenêtre glissante). Le contrôleur 160 comporte aussi un autre superviseur de valeur de variance V_MON 804 pour les mesures reçues via la seconde interface IF 802.

Le contrôleur 160 comporte aussi un soustracteur SUB (« Subtractor » en anglais) 805 prenant en première entrée la valeur de variance, préférentiellement glissante, fournie par le superviseur de valeur de variance V_MON 803 et en seconde entrée la valeur de variance fournie par le superviseur de valeur de variance, préférentiellement glissante, V_MON 804, et en calcule une valeur de différence.

Le contrôleur 160 comporte en outre un comparateur COMP 806 prenant en première entrée la valeur de différence fournie par le soustracteur SUB 805 et en seconde entrée une valeur de seuil TH3 (troisième seuil prédéterminé) ou TH4 (quatrième seuil prédéterminé), et effectue une comparaison entre les première et seconde entrées.

Le contrôleur 160 comporte aussi un gestionnaire de notification NM 807 afin de générer la notification évoquée à l'étape 707. Par exemple, le gestionnaire de notification NM 807 déclenche une alerte lorsque la valeur de différence de variance est supérieure à la valeur de seuil TH3 ou TH4.

Les agencements modulaires des Figs. 6 et 8 peuvent être implémentés seuls ou en parallèle.

## Revendications

1. Aéronef suiveur (302) dans un vol en formation comportant un système de gestion des commandes de vol ayant au moins une source d'informations et un système d'aide au vol en formation (120) de l'aéronef suiveur (302) par rapport à un tourbillon marginal d'un aéronef meneur (301), le système d'aide au vol en formation (120) étant indépendant de la au moins une source d'informations du système de gestion des commandes de vol, **caractérisé en ce que** le système d'aide au vol en formation (120) comporte un contrôleur (160) et au moins un accéléromètre (130) installé sur l'aéronef suiveur (302), le contrôleur (160) comportant de la circuiterie électronique configurée pour :
- recevoir (501, 601; 701, 703, 801, 802) des mesures d'accélération effectuées par ledit au moins un accéléromètre (130);
- traiter (502, 602; 702, 704, 803, 804) les mesures reçues de sorte à en obtenir une valeur représentative de vibrations générées par le tourbillon marginal de l'aéronef meneur (301) ;
- effectuer (503, 603; 706, 806) une comparaison de la valeur obtenue avec un seuil prédéterminé représentatif de vibrations excessives au regard de la localisation dudit au moins un accéléromètre (130) sur l'aéronef suiveur (302) ;
- générer (504, 604; 707, 807) une notification lorsque la comparaison montre que la valeur obtenue est supérieure au seuil prédéterminé, la notification étant un message envoyé au système de gestion des commandes de vol,
et **en ce que** le système de gestion des commandes de vol est configuré pour effectuer des ajustements de trajectoire de l'aéronef suiveur (302) en fonction dudit message.

2. Aéronef suiveur (302) selon la revendication 1, dans lequel le contrôleur (160) comporte de la circuiterie électronique configurée pour :
- recevoir (501, 601) des mesures d'accélération effectuées par un dit accéléromètre (130) ;
- extraire (502, 602) des mesures d'accélération reçues une valeur de crête sur une fenêtre temporelle de durée prédéfinie ;
- comparer (503, 603) la valeur de crête extraite avec le seuil prédéterminé ;
- générer (504, 604) la notification lorsque la comparaison montre que la valeur de crête extraite est supérieure au seuil prédéterminé.

3. Aéronef suiveur (302) selon la revendication 1, dans lequel le contrôleur (160) comporte de la circuiterie électronique configurée pour :
- recevoir des mesures d'accélération effectuées par un dit accéléromètre (130) ;
- extraire des mesures d'accélération reçues une valeur de variance sur une fenêtre temporelle ;
- comparer la valeur de variance extraite avec le seuil prédéterminé ;
- générer la notification lorsque la comparaison montre que la valeur de variance extraite est supérieure audit seuil prédéterminé.

4. Aéronef suiveur (302) selon la revendication 1 ou 3, dans lequel le contrôleur (160) comporte de la circuiterie électronique configurée pour:
- recevoir (701, 801) des premières mesures d'accélération effectuées par un premier dit accéléromètre (130) localisé sur une aile de l'aéronef suiveur (302) ;
- extraire (702, 803) des premières mesures d'accélération reçues une première valeur de variance sur une fenêtre temporelle ;
- recevoir (703, 802) des deuxièmes mesures d'accélération effectuées par un second dit accéléromètre localisé sur l'autre aile de l'aéronef suiveur ;
- extraire (704, 804) des deuxièmes mesures d'accélération reçues une deuxième valeur de variance sur la fenêtre temporelle ;
- déterminer (705, 805) une valeur de différence entre les première et deuxième valeurs de variance ;
- comparer (706, 806) la valeur de différence déterminée avec le seuil prédéterminé ou un autre seuil prédéterminé ;
- générer (707, 807) la notification lorsque la comparaison montre que la valeur de différence déterminée est supérieure au deuxième seuil prédéterminé ou respectivement à l'autre seuil prédéterminé.

5. Aéronef suiveur (302) selon la revendication 3 ou 4, dans lequel chaque valeur de variance est une valeur de variance glissante.

6. Aéronef suiveur (302) selon l'une quelconque des revendications 1 à 5, dans lequel le contrôleur (160) comporte de la circuiterie électronique configurée pour obtenir une information indiquant si l'aéronef suiveur (302) se trouve à droite ou à gauche de l'aéronef meneur (301).

7. Aéronef suiveur (302) selon la revendication 6, dans lequel, lorsque plusieurs dits accéléromètres (130) sont installés sur l'aéronef suiveur (302), le contrôleur (160) comporte de la circuiterie électronique configurée pour obtenir l'information indiquant si l'aéronef suiveur (302) se trouve à droite ou à gauche de l'aéronef meneur (301) en comparant entre elles des mesures reçues desdits accéléromètres (130).

8. Aéronef suiveur (302) selon l'une quelconque des revendications 1 à 7, dans lequel la notification est un ordre d'activation d'un signal lumineux et/ou sonore dans le cockpit de l'aéronef suiveur (302) et/ou un message envoyé à un système de gestion des commandes de vol de l'aéronef suiveur (302).

## Patentansprüche

1. Nachfolgendes Luftfahrzeug (302) in einem Formationsflug, das ein Verwaltungssystem der Flugsteuerungen, das mindestens eine Informationsquelle hat, und ein Formationsflug-Assistenzsystem (120) des nachfolgenden Luftfahrzeugs (302) bezüglich eines Randwirbels eines vorausfliegenden Luftfahrzeugs (301) aufweist, wobei das Formationsflug-Assistenzsystem (120) von der mindestens einen Informationsquelle des Verwaltungssystems der Flugsteuerungen unabhängig ist, **dadurch gekennzeichnet, dass** das Formationsflug-Assistenzsystem (120) eine Steuereinheit (160) und mindestens einen im nachfolgenden Luftfahrzeug (302) installierten Beschleunigungsmesser (130) aufweist, wobei die Steuereinheit (160) eine elektronische Schaltung aufweist, die konfiguriert ist, um:
- von dem mindestens einen Beschleunigungsmesser (130) ausgeführte Beschleunigungsmessungen zu empfangen (501, 601; 701, 703, 801, 802);
- die empfangenen Messungen zu verarbeiten (502, 602; 702, 704, 803, 804), um daraus einen für vom Randwirbel des vorausfliegenden Luftfahrzeugs (301) erzeugte Vibrationen repräsentativen Wert zu erhalten;
- einen Vergleich des erhaltenen Werts mit einer vorbestimmten Schwelle auszuführen (503, 603; 706, 806), die für übermäßige Vibrationen im Hinblick auf die Lokalisierung des mindestens einen Beschleunigungsmessers (130) auf dem nachfolgenden Luftfahrzeug (302) repräsentativ ist;
- eine Benachrichtigung zu erzeugen (504, 604; 707, 807), wenn der Vergleich zeigt, dass der erhaltene Wert höher ist als die vorbestimmte Schwelle, wobei die Benachrichtigung eine an das Verwaltungssystem der Flugsteuerungen geschickte Nachricht ist,
und dass das Verwaltungssystem der Flugsteuerungen konfiguriert ist, Flugbahnanpassungen des nachfolgenden Luftfahrzeugs (302) abhängig von der Nachricht auszuführen.

2. Nachfolgendes Luftfahrzeug (302) nach Anspruch 1, wobei die Steuereinheit (160) eine elektronische Schaltung aufweist, die konfiguriert ist, um:
- von einem Beschleunigungsmesser (130) ausgeführte Beschleunigungsmessungen zu empfangen (501, 601);
- aus den Beschleunigungsmessungen einen Spitzenwert in einem Zeitfenster vordefinierter Dauer zu entnehmen (502, 602);
- den entnommenen Spitzenwert mit der vorbestimmten Schwelle zu vergleichen (503, 603);
- die Benachrichtigung zu erzeugen (504, 604), wenn der Vergleich zeigt, dass der entnommene Spitzenwert höher ist als die vorbestimmte Schwelle.

3. Nachfolgendes Luftfahrzeug (302) nach Anspruch 1, wobei die Steuereinheit (160) eine elektronische Schaltung aufweist, die konfiguriert ist, um:
- von einem Beschleunigungsmesser (130) ausgeführte Beschleunigungsmessungen zu empfangen;
- aus den empfangenen Beschleunigungsmessungen einen Varianzwert in einem Zeitfenster zu entnehmen;
- den entnommenen Varianzwert mit der vorbestimmten Schwelle zu vergleichen;
- die Benachrichtigung zu erzeugen, wenn der Vergleich zeigt, dass der entnommene Varianzwert höher ist als die vorbestimmte Schwelle.

4. Nachfolgendes Luftfahrzeug (302) nach Anspruch 1 oder 3, wobei die Steuereinheit (160) eine elektronische Schaltung aufweist, die konfiguriert ist, um:
- von einem auf einem Flügel des nachfolgenden Luftfahrzeugs (302) befindlichen ersten Beschleunigungsmesser (130) ausgeführte erste Beschleunigungsmessungen zu empfangen (701, 801);
- aus den ersten empfangenen Beschleunigungsmessungen einen ersten Varianzwert in einem Zeitfenster zu entnehmen (702, 803);
- von einem auf dem anderen Flügel des nachfolgenden Luftfahrzeugs befindlichen zweiten Beschleunigungsmesser ausgeführte zweite Beschleunigungsmessungen zu empfangen (703, 802);
- aus den zweiten empfangenen Beschleunigungsmessungen einen zweiten Varianzwert im Zeitfenster zu entnehmen (704, 804);
- einen Differenzwert zwischen dem ersten und dem zweiten Varianzwert zu bestimmen (705, 805);
- den bestimmten Differenzwert mit der vorbestimmten Schwelle oder einer anderen vorbestimmten Schwelle zu vergleichen (706, 806);
- die Benachrichtigung zu erzeugen (707, 807), wenn der Vergleich zeigt, dass der bestimmte Differenzwert höher als die zweite vorbestimmte Schwelle bzw. die andere vorbestimmte Schwelle ist.

5. Nachfolgendes Luftfahrzeug (302) nach Anspruch 3 oder 4, wobei jeder Varianzwert ein gleitender Varianzwert ist.

6. Nachfolgendes Luftfahrzeug (302) nach einem der Ansprüche 1 bis 5, wobei die Steuereinheit (160) eine elektronische Schaltung aufweist, die konfiguriert ist, um eine Information zu erhalten, die anzeigt, ob das nachfolgende Luftfahrzeug (302) sich rechts oder links vom vorausfliegenden Luftfahrzeug (301) befindet.

7. Nachfolgendes Luftfahrzeug (302) nach Anspruch 6, wobei, wenn mehrere Beschleunigungsmesser (130) auf dem nachfolgenden Luftfahrzeug (302) installiert sind, die Steuereinheit (160) eine elektronische Schaltung aufweist, die konfiguriert ist, um die Information zu erhalten, die anzeigt, ob das nachfolgende Luftfahrzeug (302) sich rechts oder links vom vorausfliegenden Luftfahrzeug (301) befindet, indem sie von den Beschleunigungsmessern (130) empfangene Messungen miteinander vergleicht.

8. Nachfolgendes Luftfahrzeug (302) nach einem der Ansprüche 1 bis 7, wobei die Benachrichtigung ein Aktivierungsbefehl eines Leucht- und/oder Tonsignals im Cockpit des nachfolgenden Luftfahrzeugs (302) und/oder eine Nachricht ist, die an ein Verwaltungssystem der Flugsteuerungen des nachfolgenden Luftfahrzeugs (302) geschickt wird.

## Claims

1. Follower aircraft (302) in formation flying comprising a flight command management system having at least one information source and a system (120) for aiding formation flying of the follower aircraft (302) with respect to a wake vortex from a leader aircraft (301), the system (120) for aiding formation flying being independent of the at least one information source of the flight command management system, **characterized in that** the system (120) for aiding formation flying comprises a controller (160) and at least one accelerometer (130) installed on the follower aircraft (302), the controller (160) comprising electronic circuitry configured so as to:
- receive (501, 601; 701, 703, 801, 802) acceleration measurements performed by said at least one accelerometer (130) ;
- process (502, 602; 702, 704, 803, 804) the received measurements so as to obtain therefrom a value representative of vibrations generated by the wake vortex from the leader aircraft (301);
- compare (503, 603; 706, 806) the obtained value with a predetermined threshold representative of excessive vibrations with regard to the location of said at least one accelerometer (130) on the follower aircraft (302);
- generate (504, 604; 707, 807) a notification when the comparison shows that the obtained value is greater than the predetermined threshold, the notification being a message sent to the flight command management system,
and **in that** the flight command management system is configured so as to make adjustments to the trajectory of the follower aircraft (302) based on said message.

2. Follower aircraft (302) according to Claim 1, wherein the controller (160) comprises electronic circuitry configured so as to:
- receive (501, 601) acceleration measurements performed by a said accelerometer (130);
- extract (502, 602), from the received acceleration measurements, a peak value over a time window of predefined duration;
- compare (503, 603) the extracted peak value with the predetermined threshold;
- generate (504, 604) the notification when the comparison shows that the extracted peak value is greater than the predetermined threshold.

3. Follower aircraft (302) according to Claim 1, wherein the controller (160) comprises electronic circuitry configured so as to:
- receive acceleration measurements performed by a said accelerometer (130);
- extract, from the received acceleration measurements, a variance value over a time window;
- compare the extracted variance value with the predetermined threshold;
- generate the notification when the comparison shows that the extracted variance value is greater than said predetermined threshold.

4. Follower aircraft (302) according to Claim 1 or 3, wherein the controller (160) comprises electronic circuitry configured so as to:
- receive (701, 801) first acceleration measurements performed by a first said accelerometer (130) located on one wing of the follower aircraft (302);
- extract (702, 803), from the received first acceleration measurements, a first variance value over a time window;
- receive (703, 802) second acceleration measurements performed by a second said accelerometer located on the other wing of the follower aircraft;
- extract (704, 804), from the received second acceleration measurements, a second variance value over the time window;
- determine (705, 805) a difference value between the first and second variance values;
- compare (706, 806) the determined difference value with the predetermined threshold or another predetermined threshold;
- generate (707, 807) the notification when the comparison shows that the determined difference value is greater than the predetermined second threshold or, respectively, than the other predetermined threshold.

5. Follower aircraft (302) according to Claim 3 or 4, wherein each variance value is a sliding variance value.

6. Follower aircraft (302) according to any one of Claims 1 to 5, wherein the controller (160) comprises electronic circuitry configured so as to obtain information indicating whether the follower aircraft (302) is located to the right or to the left of the leader aircraft (301).

7. Follower aircraft (302) according to Claim 6, wherein, when a plurality of said accelerometers (130) are installed on the follower aircraft (302), the controller (160) comprises electronic circuitry configured so as to obtain the information indicating whether the follower aircraft (302) is located to the right or to the left of the leader aircraft (301) by comparing measurements received from said accelerometers (130) with one another.

8. Follower aircraft (302) according to any one of Claims 1 to 7, wherein the notification is an order to activate a light-based and/or sound-based signal in the cockpit of the follower aircraft (302) and/or a message sent to a flight command management system of the follower aircraft (302).
